# EUROPEAN PATENT SPECIFICATION

(11) **EP 3 830 811 B1**
(45) Date of publication and mention of the grant of the patent: **29.10.2025**
(21) Application number: 19758613.4
(22) Date of filing: 29.07.2019
(51) Int. Cl.: G09B 19/00

(54) **SYSTEM AND METHOD FOR PHYSICAL TRAINING OF A BODY PART**
SYSTEM UND VERFAHREN FÜR KÖRPERLICHES TRAINING EINES KÖRPERTEILS
SYSTÈME ET PROCÉDÉ D'ENTRAÎNEMENT PHYSIQUE D'UNE PARTIE DU CORPS

(30) Priority: 27.07.2018 CH 9312018
(43) Date of publication of application: 09.06.2021
(73) Proprietor: Tyromotion GmbH, 8020 Graz (AT)
(72) Inventor: BAUMANN, Denise, 4132 Muttenz (CH); SCHKOMMODAU, Erik, 4132 Muttenz (CH); SCHWARZFISCHER, Michael, 79219 Staufen im Breisgau (DE); RICKERT, Christoph, 4153 Reinach (CH); BAUER, Samuel, 8037 Zürich (CH)
(74) Representative: Maikowski & Ninnemann Patentanwälte Partnerschaft mbB
(86) International application number: PCT/EP2019/070329
(87) International publication number: WO 2020/021120

(56) References cited:
- EP-A1- 2 889 853
- EP-A1- 2 924 675
- GB-A- 2 462 780
- SU CHUAN-JUN ET AL: "Kinect-enabled home-based rehabilitation system using Dynamic Time Warping and fuzzy logic", APPLIED SOFT COMPUTING, ELSEVIER, AMSTERDAM, NL, vol. 22, 9 May 2014 (2014-05-09), pages 652 - 666, XP028860198, ISSN: 1568-4946, DOI: 10.1016/J.ASOC.2014.04.020
- GABRIELE SPINA ET AL: "COPDTrainer : a smartphone-based motion rehabilitation training system with real-time acoustic feedback", PROCEEDINGS OF THE 2013 ACM INTERNATIONAL JOINT CONFERENCE ON PERVASIVE AND UBIQUITOUS COMPUTING, UBICOMP '13, 1 January 2013 (2013-01-01), New York, New York, USA, pages 597, XP055553925, ISBN: 978-1-4503-1770-2, DOI: 10.1145/2493432.2493454

## Description

The present invention relates to a system for physical training of a body part according to the preamble of claim 1 and to a method of physically training a body part of a user of the system according to the preamble of claim 9. More particularly the present invention relates to a physical training system comprising a sensor unit to be mounted to a particular body part of a user for detecting a movement of the body part, and to a method of physically training a body part of a user and instructing a user physically training a body part, respectively, by providing a training movement model.

Such a system and method can be used for assisting and/or supervising any exercising of a person that includes defined movements or repetitive movement patterns. The system and method can provide feedback to the user about his or her training effort and success. They can support the training of body movements that are new for the individual person or the person had been disabled to perform. Also, they support the exercising of known body movements, for example for improving the security of performing the movement or the intensity of the movement.

Systems for monitoring exercises of the physical training of a person are widely used, for example, in fitness training devices like cross trainers, treadmills or rowing machines. Sensors detect the movement of the training devices and display the training results on a screen, for example the quantity of movements or an equivalent distance travelled by the movement. The displayed results are then typically analysed. However, such monitoring systems focus on the movement of the device and not of the person as they are not attached to the person.

Systems for indicating the motion of a person are further known. They use a sensor unit that is mounted to a body part of a user and detects the movement of the body part. The sensor collects data corresponding to the body part movement, which is translated for example into a count of movements, a distance travelled and/or a time taken per movement.

Such systems allow for quantifying and reporting the user's training efforts. A real time indication of training effort may enhance the user's immediate motivation for training. Reporting of the training efforts over time may indicate an increasing or declining trend of the training efforts.

Also, devices that recognize the type of movement of a body part of a user of the device are known. For example, a physical activity monitoring device that can be mounted to a user is described in US 9,174, 084 B2. The device comprises a sensor array for measuring the physical activity of the user, for example, during a workout. A controller of the device receives signal information from the sensor array and determines time intervals where the user is actively engaged in the physical activity. According to measured attributes of the physical activity the controller may determine the type of physical activity, which may be indicated by the device. Thus, the quantity of different types of activities can be reported. For example, the device may be worn by the user using a wristband.

Other monitoring applications use for example existing mobile devices like mobile phones or small tablet computers and take advantage of the built-in sensors of the devices to observe activities of an individual person wearing the mobile device. Activity reports can be displayed on a screen of the mobile device. However, there is limited readability of the displayed information while the mobile device is attached to the user for measuring the activities of the user. Further, there are applications for mobile devices that provide information about exercises that can be selected from a library storing a variety of exercises for different types of trainings for different parts of the body. The exercises provided by the library are standardized to match the needs of a plurality of users.

Spina et al. (Spina, Gabriele, et al. "COPDTrainer: A Smartphone-based Motion Rehabilitation Training System with Real-Time Acoustic Feedback." Proceedings of the 2013 ACM International Joint Conference on Pervasive and Ubiquitous Computing. 2013*)* describes a training system based on a smartphone that integrates in clinical routines and serves as a tool for therapist and patient. A sinusoidal motion model was used to exploit the typical repetitive structure of motion exercises. A Teach-mode was used to personalize the system by training under the guidance of a therapist and deriving exercise model parameters. In a Train-mode, the system provides exercise feedback.

Su et al. (Su, Chuan-Jun, Chang-Yu Chiang, and Jing-Yan Huang. "Kinect-enabled home-based rehabilitation system using Dynamic Time Warping and fuzzy logic." Applied Soft Computing 22 (2014): 652-666) describes a Kinect-based system for ensuring home-based rehabilitation using a Dynamic Time Warping (DTW) algorithm and fuzzy logic. The ultimate goal of this system is to assist patients in conducting safe and effective home-based rehabilitation without the immediate supervision of a physician.

However, existing training systems and methods cannot evaluate the quality of movements when exercising or training. Particularly, they cannot assess the performance or any improvement of an individual user pursuing individual physical exercises. Further, such systems typically detect or monitor exercise execution as a whole. However, exercises are usually represented as a sequence of motions, wherein some motions may require more intense training than others. Existing systems do not distinguish between motions of an exercise sequence. Further, in known systems exercises extracted from a library as a template for a user cannot be individualized to the specific needs of the user.

Therefore, there is a need for improving the information and feedback provided by a physical training device to enhance the training success of an individual user. Also, there is a need for improving the method of physically training a body part of a person to enhance the wellbeing and mobility of the person.

It is an object of the present invention to increase the level of detail of information about a person's training, provide information about the performance and changes of the performance of exercises to the exercising person and customize the feedback about the exercise, preferably to provide information about the quality of the exercise performed by the person and give instructions for improving the performance of the exercise.

According to the invention, these needs are settled by a system for physical training of a body part as it is defined by the features of independent claim 1, and by a method of physically training a body part of a user as it is defined by the features of independent claim 9. Preferred embodiments and method steps are subject of the dependent claims.

In a first aspect, the invention provides a system for physical training of a body part. The system comprises a tracker having a mounting structure configured to fasten the tracker to a particular body part of a user of the system and further having a sensor unit configured to three-dimensionally detect a movement of the body part. According to the invention the system further comprises a model generation arrangement connectable to the tracker. The model generation arrangement is configured to obtain first sensor data about a sequence of motion of the body part detected by the tracker or the sensor unit, respectively. The sequence of motion may, for example, correspond to a movement during an exercise for training the body part or a defined part of the exercise. Further, the model generation arrangement is configured to optionally preprocess the obtained first sensor data to generate an individual movement model based on the optionally preprocessed first sensor data. The model generation arrangement for example may comprise a modelling unit for generating the individual movement model. Further, the system for physical training comprises an analysis arrangement connectable to the tracker or the sensor unit, respectively. The analysis arrangement is configured to obtain second sensor data about a current motion or a series of motions of the body part. It is further configured to evaluate the second sensor data and check compliance thereof with respect to the individual movement model generated from the first sensor data by the model generation arrangement. The individual movement model may be provided to the analysis arrangement, for example by directly connecting the model generation arrangement to the analysis arrangement or indirectly for example via the tracker.

The model generation arrangement is configured to obtain plural first sensor data about plural sequences of motion detected by the tracker, to preprocess the obtained plural first sensor data, to generate a set of individual movement models based on the preprocessed plural first sensor data and to select the individual movement model from the set of individual movement models. Alternatively to selecting one out of the set of individual movement models, the individual movement models can also be processed to one resulting output model as the individual movement model. For example, the output model can be generated by calculating averages of plural individual movement models or the like. By generating a set of models and evaluating one version thereof as the individual movement model, the best or most appropriate model can be generated. For example, when performing the movements for generating the model, the user may make some mistakes or involve deviations from an ideal movement. By repeating the same movement and gathering the set of models, such inconsistencies can be reduced or eliminated. Like this, the quality of the individual movement model and, thus, the exercise or therapy can be increased. Thereby, the model generation arrangement preferably is configured to select the individual movement model from the set of individual movement models by applying a dynamic time warping (DTW) algorithm. Such DTW algorithm allows for efficiently evaluating the set of models and to select the preferred one as the individual movement model.

The analysis arrangement is configured to evaluate the second sensor data about the current motion of the body part by evaluation of a complete training sequence of the current motion. Thereby, the term "complete training sequence" relates to a full movement sequence involved in the training. Compared to a data point by point evaluation or comparison such consideration of the complete training sequence allows for increased accuracy and completeness of the training assessment. Like this, the quality of the training evaluation and, thus, the training itself can significantly be increased. Furthermore, the uses are not disturbed during the execution of an exercise and have to perform it unassisted and have to remember the exercise by themselves as no guidance or feedback is provided during the execution of the training.

The analysis arrangement is further configured to evaluate the second sensor data about the current motion of the body part and to check the compliance of the evaluated second sensor data with respect to the individual movement model by applying a dynamic time warping algorithm.

The first and second sensor data can also be referred to as primary sensor data and secondary sensor data, respectively. Thereby, the terms "primary" and "secondary" as used in connection with the sensor data relate to different points in time. The primary sensor data are obtained first and the secondary sensor data afterwards. Thus, the primary sensor data are different from the secondary, and the primary sensor data can be a first dataset or data-stream, and the secondary sensor data a second dataset or data-stream.

The current motion to be evaluated can be any movement of the body part of the user of the system for physical training that is performed after the individual movement model has been generated from the first sensor data by the model generation arrangement. Thereby, the evaluation of the current motion can be performed in real-time or at a time later based on a recording or recorded data of the current motion, i.e. the recorded motion. In particular, the current motion or data of the current motion can be transferred from the tracker to the analysis arrangement such a server or similar computing device where it is recorded or stored. This transfer can be performed run time or once the current motion is completed. Thus, the current motion can be evaluated after its completion. Evaluating the current motion after transferring it and/or recording it allows for providing plural benefits. For example, the evaluation can be applied on an infrastructure where the best performance can be achieved. Further, previous data or other data can efficiently be involved in the evaluation. Still further, the complete current motion can be evaluated which allows for giving a more complete picture or analysis compared to a pointwise assessment. The current motion can be of the same time period as the sequence of motion underlying the first sensor data or it can be of a shorter or longer period. It can correspond or be similar only to parts of the sequence of motion or it can include additional motions. In any case, the analysis arrangement will check compliance of the detected current motion represented by the second sensor data with the individual movement model derived from the initial sequence of motion.

Thus, the system for physical training of a body part according to the present invention not only detects that a sequence of motion representing an exercise had been performed and may track the quantity of exercises if desired. It also can evaluate the quality of subsequent exercises by comparing their movement to the individual movement model that has been generated specifically for an individual user. That means the system for physical training of a body part can provide personalized information about the development of exercises and a training success. Further, it may provide instructions for improving current movements.

The individual movement model is based on the first sensor data derived from the sequence of motion of an exercise to be analyzed. Thus, the sequence of motion providing the primary data represents a baseline and serves as a reference movement or reference exercise. The individual movement model can particularly be a data signal package representing a reference sequence of motion of the user. In particular such data signal package can comprise information about single movements or a set of movements involved in the sequence of motion performed by the user when performing the reference sequence of motion.

The individual movement model can be determined solely based on the primary sequence of motion data. Nevertheless, amendments may be introduced during modeling that improve the sequence of motion performed by the body part and which represent an amended reference movement. Amendments may be introduced for example regarding a physically more advantageous movement or a movement having an enhanced training effect. The amendments may be added by processing the first sensor data for example during the modeling step and can be included in the data signal package.

The term "arrangement" as used in connection with the physical training system refers to one or more technical elements or units cooperating and configured to perform the technical task or function of the arrangement. The one or more technical elements or units may be combined to establish one entity or they may be spatially separate but connectable to each other to realize the arrangement.

The term "connectable" as used in connection with the tracker, the model generation arrangement and the analysis arrangement refers to a communication connection. Such connection can either be physical such as wired or advantageously wireless. The main aim of such a connection is to establish a communication channel between the connected elements in order to allow data or information transfer as, for example, the primary and second sensor data or information about the individual movement model.

The term "individual" in connection with the movement model relates to a user specific model determined by the effective motions of the said specific user. In contrast to commonly known training plans, wherein motion sequences are collected from libraries, the individual movement model reflects the specific personal motion sequence of the body part of the said user. In this way, the individual behavior of the user can be taken into account during training and individualized information and instructions can be provided.

In accordance with the invention the model generation arrangement and/or the analysis arrangement can be configured by being programmed to conduct their respective tasks as explained above. They can particularly run a software application, which implements the respective configuration. The model generation arrangement for example can run a software application to obtain the first sensor data, to preprocess the obtained first sensor data and to generate the individual movement model. The analysis arrangement for example can run a software application to evaluate the second sensor data and to check compliance with the individual movement model. The arrangements may comprise several units each configured to conduct one or more of the tasks. For example, a modeling unit may run a software application to generate the individual movement model.

The term "obtain" in the context of the first sensor data can relate to any kind of collecting or gathering of the data. Depending on the desired implementation, it can be or comprise transferring the first sensor data to the model generation arrangement, reading the first sensor data from an internal or external data storage in which the data have been stored by the tracker, recording the first sensor data or the like.

The term "preprocess" in the context of the first sensor data can relate to any kind of processing of the detected data in preparation of generating the individual movement model. The preprocessing ensures suitability and accessibility of the first sensor data for the modeling. Advantageously, the model generation arrangement is configured to preprocess the obtained first sensor data by applying one or more of filtering, smoothing out, normalizing, and transforming coordinate system. Thereby, transforming the coordinate system can involve transformation of an individual coordinate system of the tracker depending on its current orientation into a superordinate coordinate system independent from the orientation of the tracker. This can allow for comparing or matching the sensor data gathered at different orientations of the tracker.

The mounting structure of the physical training system can be specifically embodied such that the tracker can be fastened to a specific kind of body parts. Advantageously, the mounting structure of the tracker comprises a wristband or an ankle band. Thus, the tracker can easily be applied to the body part by the user himself or herself. Also, for most exercising movements the end of the body extremities, like a hand or a foot, cover the largest distances which results in a high data quality of the detected data sets for describing a movement of the body part.

According to one embodiment of the physical training system of the invention the sensor unit of the tracker is configured to detect the movement of the body part in three perpendicular axes. The three perpendicular axes can form the axes of a reference coordinate system. For example, the origin of the reference coordinate system may be defined by a relaxed position of the body part to be analyzed or a still position before the beginning of an exercise. The use of other coordinate systems, like a cylindrical or spherical system, to describe the movement of the body part are possible but may result in more involved data processing. The sensor unit of the tracker may comprise an accelerometer, a gyroscope, a magnetometer, a global positioning system receiver or any combination thereof. The choice of a type of sensor unit may be based on the desired coordinate system to be used for describing the body part movement and data detection.

According to a further embodiment of the physical training system of the invention the tracker can comprise an intermediate data storage configured to store sensor data detected by the sensor unit of the tracker. In this context, the sensor data can be or comprise the first sensor data, the second sensor data and/or any other sensor data. Other data may for example include additional data about the body of the user or about the exercising environment like the temperature or altitude. The intermediate data storage can be or comprise a flash memory or a similar structure.

According to a still further embodiment of the physical training system the tracker can comprise a sender interface and may be configured to transmit sensor data via the sender interface. In this context as well, the sensor data can be or comprise the first sensor data, the second sensor data and/or any other sensor data. The sender interface can comprise a wired or wireless adapter for establishing a data communication connection to another element such as the model generation arrangement and/or the analysis arrangement. The tracker can, thus, be connected to the model generation arrangement and/or the analysis arrangement by means of the sender interface. Additionally, the tracker may comprise a receiver interface to receive data or inquire data from other elements, e. g. the model generation arrangement or the analysis arrangement.

Preferably, the tracker is configured to transmit the sensor data via the sender interface by streaming the sensor data. The term "streaming" in this context can relate to a sequence of data items, i.e. the sensor data, made available over time such that the data items can be processed one at a time rather than in batches. Such streaming may allow or involve a more or less runtime or live sensor data transfer. The term "runtime" as used herein relates to a quasi immediate transfer while the sensor data are established. Thereby, minor deviations in time due to technical constraints may occur. Also, the processing of the sensor data can require more or less runtime when transmitted by streaming. Streaming the sensor data provides more flexibility for data handling when using the physical training system.

According to an embodiment of the system of the invention, the model generation and analysis arrangements can be connected to the tracker by means of a collector interface. The model generation arrangement may comprise a collector interface configured to receive the first sensor data transmitted by the tracker, and the analysis arrangement may comprise a collector interface configured to receive the second sensor data transmitted by the tracker. Similar as above the collector interface of the model generation arrangement and/or of the analysis arrangement can comprise a wired or wireless adapter for establishing a data communication connection to another element such as the tracker, the model generation arrangement and/or the analysis arrangement.

According to a further embodiment of the system of the invention, the model generation arrangement comprises a computer. Also, the analysis arrangement can comprise a computer. The term "computer" as used herein can relate to any suitable computing device such as a laptop computer, a desktop computer, a server computer, a tablet, a smartphone, a sophisticated tracker, or the like. The term covers single devices as well as combined devices. A computer can, for example, be a distributed system, such as a cloud solution, performing different tasks at different locations. A computer typically involves a processor or central processing unit (CPU), a permanent data storage having a recording medium such as a hard disk, a flash memory or the like, a random access memory (RAM), a read only memory (ROM), a communication adapter such as an universal serial bus (USB) adapter, a local area network (LAN) adapter, a wireless LAN (WLAN) adapter, a Bluetooth adapter or the like, and a user interface such as a keyboard, a mouse, a touch screen, a screen, a microphone, a speaker or the like. Computers can be embodied with a broad variety of components as the components listed here.

The computer of the analysis arrangement can be a different or the same entity as the computer of the model generation arrangement. Thus, model generation arrangement and analysis arrangement can be embodied in one single device or structure, or on different devices or structures. Additionally, the complete model generation arrangement, the complete analysis arrangement, a combination thereof or some portions thereof can be embodied on the tracker itself.

In one alternative, the analysis arrangement comprises a user device, such as a mobile phone or tablet, and a server component, such as a cloud service or server computer. Thereby, the mobile user device can be configured to receive the second sensor data from the tracker and to transfer it to the server component where it is evaluated. The results of the evaluation can then be presented by the server component itself and/or transferred to the user device for presentation.

According to yet another embodiment of the physical training system the analysis arrangement is configured to evaluate the second sensor data about the current motion of the body part and to check the compliance of the evaluated second sensor data with respect to the individual movement model by applying a DTW algorithm. The algorithm measures similarity between the second dataset and the individual movement model. For example, it measures the conformity of the temporal progress of current motions compared to the individual movement model representing the reference sequence of motion.

According to another embodiment of the system of the invention, the analysis arrangement is configured to provide a compliance signal representing a level or degree of compliance of the evaluated second sensor data with respect to the individual movement model. In a simple variant, the compliance signal can be an alarm signal indicating that the exercise is not performed in accordance with the model. In such embodiment the level of compliance simply is "fulfilled" or "non-fulfilled". In a more involved variant, the compliance signal could indicate the degree of deviation of the current motion from the individual movement model. For example, an indicator could rise along a scale according to the compliance of the second dataset with the individual movement model. The compliance signal simply is an indicator about the compliance of the current motion and therefore about the quality of the current motion of an exercise. Also, it can be understood as an instruction to amend the performance of the exercise. In a further variant, the compliance signal could indicate which part of a current exercise needed improvement. For example, a color code could be used to indicate compliant and non-compliant motions within an exercise. Or arrows could be used to indicate a direction of movement for improving the exercise.

In a possible variant, the system of the invention comprises more than one tracker, each of which may be mounted to a different part of the body, for example to a wrist and an ankle. Thus, primary datasets about the different body parts can be obtained by the respective sensor unit of the trackers and transmitted to the model generation arrangement. The model generation arrangement can generate separate individual movement models for each of the body parts. Advantageously, the model generation arrangement can generate a summarized individual movement model representing all body parts that delivered first sensor data. Accordingly, the analysis arrangement may evaluate a secondary dataset for each of the body parts and check compliance of the evaluated secondary dataset with respect to the respective individual movement model of the corresponding body part or with the summarized individual movement model.

The physical training system of the invention enables a user to survey his or her training efforts and to correct the performance of exercises if their quality decreases in the course of the training. A personal trainer or practitioner may introduce a specific exercise to a user and explain the proper sequence of motion. But the personal trainer is no longer required to observe the repetitions of the exercise to ensure correct performance and avoid incorrect moves that may lead to physical damages or in appropriate training.

Thereby, the analysis arrangement preferably is configured to evaluate the second sensor data about the current or recorded motion of the body part by determining a quantity of repetitions identified in the complete training sequence, a duration of the complete training sequence, a duration for each repetition identified in the complete training sequence or a combination thereof. Such measures and, particularly, a combination thereof allow an increased rating or judgement of the training.

The analysis arrangement preferably is configured to check the compliance of the evaluated secondary sensor data with respect to the individual movement model by comparing the complete training sequence or a repetition identified in the complete training sequence. The repetition can be a portion of the complete training sequence which is plurally re-performed. By checking compliance in this way, accuracy and quality of the analysis of the training can be increased.

Preferably, the analysis arrangement is configured to check the compliance of the evaluated secondary sensor data with respect to the individual movement model by calculating a matching score. Such score allows for a grained rating of the training.

Preferably, the analysis arrangement is configured to evaluate the second sensor data about the current motion of the body part by taking into account a speed of the current motion, a regularity of the current motion, an acceleration of the current motion, a consistency of the current motion, a trembling identified in the current motion. Such measures and, particularly, a combination thereof allow for increasing the quality of the analysis and the rating of the training.

In a second aspect, the invention provides a method of physically training a body part of a user. Thus, it can provide a method of informing or instructing a user who physically trains a body part or body parts. The method comprises the following steps:

In a first step, a training is prepared by generating a movement model defined by a sequence of motion for physically training a body part. Thus, the first step represents a movement modeling step or training modeling step.

In a second step, an exercise of the user is monitored by analyzing an effectively performed current motion of the body part with respect to its compliance with the movement model such that a conclusion about the performance of the training can be drawn. Thus, the second step represents a compliance check step or conclusion step, wherein information about the quality of the training can be obtained. The information can be provided to the user.

The movement modeling step is realized in that a tracker is mounted to the body part, while the user is moving the body part in accordance with a sequence of motion corresponding to an exercise for training the body part performed by said individual user. A sensor unit of the tracker three-dimensionally detects the sequence of motion of the body part and obtains plural first sensor data representing the sequence of motion. The plural first sensor data detected by the sensor unit is transferred to a model generation arrangement connected to the tracker. The model generation arrangement preprocesses the transferred plural first sensor data. Finally, a modeling unit of the model generation arrangement generates a set of individual movement models based on the preprocessed plural first sensor data corresponding to the plural sequences of motion of the individual user. The model generation arrangement selects an individual movement model from the set of individual movement models or processes the individual movement models to one resulting output model as the individual movement model. Therefore, the individual movement model is a user specific model and customized to the individual way of said user performing the sequence of motion.

The compliance check step is realized in that the sensor unit of the tracker detects a current motion during a subsequent exercise of the body part by the user and obtains second sensor data. The second sensor data is transferred to an analysis arrangement. The analysis arrangement evaluates the second sensor data by evaluation of a complete training sequence of the current motion. Finally, the analysis arrangement checks compliance of the evaluated second sensor data with respect to the individual movement model. In doing so, the analysis arrangement evaluates the second sensor data about the current motion or the current sequence of motion of the body part and checks the compliance of the evaluated second sensor data with respect to the individual movement model by applying a dynamic time warping algorithm. Thus, deviations of the current motion from the individual movement model or conformity therewith can be recognized and feedback may be provided to the user accordingly.

Preferably, a system for physical training of a body part as described above is used to conduct the method according to the invention. Thus, the specification of the features of the physical training system as laid out before likewise applies to the features of the physical training method for corresponding elements and functions. Preferred or advantageous method steps of the physical training method are the following.

In one embodiment of the compliance check step of the physical training method, a compliance signal is provided representing a level of compliance of the evaluated second sensor data with respect to the individual movement model generated in the movement modeling step. Preferably, the compliance signal is provided by the analysis arrangement.

As the compliance check step allows for drawing a conclusion about the performance of the training, the performance may advantageously include information about the quality of the training. Also, the performance may advantageously include information about the quantity of training the sequence of motion. Further, the performance may be defined by information about preselected metrics defining the individual movement model. For example, the information may indicate a change of an applied force during the current motion, a time period needed for the sequence of motion or a change in covered distance of the motion. The information about the performance can be provided to the user by the compliance signal.

In one embodiment of the movement modeling step of the physical training method of the invention the body part, to which the tracker is mounted, is preferably an arm or a leg and, particularly, a wrist or an ankle.

Advantageously, the sensor unit of the tracker can detect the movement of the body part in three perpendicular axes. The sensor data detected by the sensor unit can for example be stored in an intermediate data storage of the tracker.

In a further embodiment of the movement modeling step of the physical training method of the invention, the tracker can comprise a sender interface for transmitting the sensor data. In the movement modeling step, the first sensor data can be transmitted to the model generation arrangement via the sender interface of the tracker and a collector interface of the model generation arrangement. In the compliance check step, the second sensor data can be transmitted to the analysis arrangement via the sender interface of the tracker and a collector interface of the analysis arrangement. Advantageously, the tracker may transmit the sensor data by streaming the sensor data.

In still a further embodiment of the movement modeling step, the first sensor data obtained from the tracker is preprocessed by applying one or more of filtering, smoothing out, normalizing, and transforming coordinate system. The preprocessing of the first sensor data may facilitate the modeling of the individual movement model by the modeling unit and reduce computing resources required for the modeling.

Advantageously, the model generation arrangement selects the individual movement model from the set of individual movement models by applying a dynamic time warping algorithm.

It is explicitly noted that the method of physically training a body part of a user according to the present invention can be a method not being a method for treatment of the human or animal body by therapy. Rather, the method supports the wellbeing of a person conducting a training according to the method and assists in improving the physical condition of the person without any therapeutic interaction.

Preferably, the analysis arrangement preferably evaluates the second sensor data by determining a quantity of repetitions identified in the complete training sequence, a duration of the complete training sequence, a duration of repetitions identified in the complete training sequence or a combination thereof, and/or the analysis arrangement preferably checks the compliance of the evaluated second sensor data with respect to the individual movement model by comparing the complete training sequence or a repetition identified in the complete training sequence.

Preferably, the analysis arrangement checks the compliance of the evaluated second sensor data with respect to the individual movement model by calculating a matching score. The analysis arrangement preferably evaluates the second sensor data by taking into account a speed of the current motion, a regularity of the current motion, an acceleration of the current motion, a consistency of the current motion, a trembling identified in the current motion.

### Brief Description of the Drawings

The system for physical training of a body part and the method of physically training a body part of a user according to the invention are described in more detail herein below by way of an exemplary embodiment and with reference to the attached drawing, which merely serve for explanation and should not be construed as being restrictive. The features of the invention becoming obvious from the drawing should be considered to be part of the disclosure of the invention both on their own and in any combination. The drawing shows a schematic illustration of a system for physical training of a body part according to the invention.

### Description of Embodiments

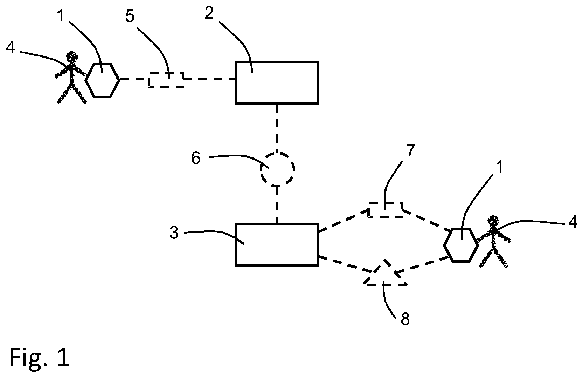

Figure 1 illustrates a system for physical training of a body part according to the invention by way of a simplified schematic visualization, which is used to perform a method of physically training a body part of a user according to the invention and a method of informing or instructing a user about his or her physical training of a body part, respectively.

The system comprises a tracker 1, a model generation arrangement 2 and an analysis arrangement 3. The tracker 1 comprises a mounting structure for fastening the tracker 1 at a particular body part of a user 4. The mounting structure could be an elastic band or two bands connectable by a closure means, for example a wristband or ankle band. The tracker 1 further comprises a sensor unit for three-dimensionally detecting a movement of the body part of the user 4. The sensor unit detects the movement in three perpendicular axes. The sensor unit may detect the movement by using an accelerometer, a gyroscope, a magnetometer, a global positioning system (GPS) receiver or any combination thereof. In use, the tracker is mounted to a wrist or an ankle.

The model generation arrangement 2 and the analysis arrangement 3 are connectable to the tracker 1 to enable data communication between the tracker 1 and the model generation arrangement 2 and the analysis arrangement 3. In particular, a wireless connection is established between tracker 1, model generation arrangement 2 and analysis arrangement 3 for communication. The tracker 1 comprises a sender interface for data transmission. The sensor data are transmitted by streaming the sensor data. Advantageously, the model generation arrangement 2 comprises an intermediate data storage for storing data detected by the sensor unit before further transmitting the data.

Initially the sensor unit of the tracker 1 detects first sensor data 5 of a sequence of motion performed by the body part carrying the tracker 1. The sequence of motion relates to an exercise for physically training the body part of the user 4. The first sensor data 5 is transmitted to the model generation arrangement a via the data communication connection.

The model generation arrangement 2 obtains the first sensor data 5 from the tracker. The model generation arrangement 2 uses a collector interface to receive the data. According to the method of the invention, the model generation arrangement 2 uses the first sensor data 5 for preparing a training for physically training the body part. The training is prepared by preprocessing the first sensor data 5, for example by filtering, scaling, differentiating, smoothing out, and/or normalizing the data. Then an individual movement model 6 is generated based on the preprocessed first sensor data 5. The individual movement model 6 is extracted from the detected sequence of motion of the individual user 4. Therefore, the individual movement model 6 serves as a reference movement model or standard movement model for said individual user 4.

The model generation arrangement 2 comprises a preprocessing unit for preprocessing the first sensor data 5 and a modeling unit for generating the individual movement model 6. The preprocessing unit and the modeling unit may be included in the same entity as the collector interface or may be external and connectable.

In summary, the movement modeling step of the method according to the invention includes at least mounting the tracker 1 to a body part of the user 4, the user 4 performing an exercise including a sequence of motion, detecting the sequence of motion as first sensor data 5, transferring the first sensor data 5 to the model generation arrangement 2, preprocessing the first sensor data 5 and generating the individual movement model 6.

Subsequently, the sensor unit of the tracker 1 detects second sensor data 7 of a current motion performed by the body part during exercising the prepared training. Ideally, the current motion corresponds to the sequence of motion defined by the first sensor data 5, when performing the training, or it constitutes an improvement. However, in the course of physically training a body, rarely one sequence of motions exactly equals another even if a person intends to repeat exactly the same. The body may simply get tired or the concentration of the person becomes less. Therefore, the effective current motion of the body part may deviate from the intended motion sequence of the training.

The second sensor data 7 is transmitted to the analysis arrangement 3 via the data communication connection with the tracker 1. The analysis arrangement 3 uses a collector interface to receive the data from the sender interface of the tracker 1. The current motion is analyzed with respect to its compliance with the individual movement model 6 such that a conclusion about a performance of the training can be drawn. The conclusion may for example indicate a level of performance by providing information about the quality of the current motion compared to the individual movement model 6, information about quantity repeating the individual movement model 6 and the like.

For conducting the compliance check step, the analysis arrangement 3 may comprise an evaluation unit and a compliance unit. The evaluation unit evaluates the second sensor data 7, for example by preparing of the data similar to the preprocessing of the first sensor data 6. The evaluated second sensor data 7 are compared to the individual movement model 6 to check compliance therewith. Preferably, a dynamic time warping algorithm is applied to analyze if the second sensor data 7 of the current motion complies with the individual movement model 6.

In summary the compliance check step of the method according to the invention includes at least transferring the second sensor data 7 relating to the user's effective training, evaluating the second sensor data 7 and checking compliance thereof with respect to the individual movement model 6.

The evaluation unit of the analysis arrangement 3 evaluates the second sensor data by evaluation of or calculating a complete training sequence of the current motion represented by the second sensor data 7. Thereby, it evaluates the second sensor data 7 by determining a quantity of repetitions identified in the complete training sequence, a duration of the complete training sequence, a duration of repetitions identified in the complete training sequence or a combination thereof. Also, it checks the compliance of the evaluated second sensor data with respect to the individual movement model 6 by comparing the complete training sequence or a repetition identified therein. Further, the evaluation unit of analysis arrangement 3 evaluates the second sensor data 7 by taking into account a speed of the current motion, a regularity of the current motion, an acceleration of the current motion, a consistency of the current motion and/or a trembling identified in the current motion.

Optionally, the analysis arrangement comprises a unit to provide a compliance signal 8 representing a level of compliance of the evaluated second sensor data 7 with respect to the individual movement model 6. The signal unit can be arranged in the same entity as the compliance unit. Alternatively, the signal unit could also be arranged in the tracker 1. The compliance signal 8 can be an acoustic, visual or other type of signal. During the compliance check step, the compliance signal informs the user about the level of conformity of his or her conducted training with the individual movement model 6 generated especially for his or her personal physical training. The compliance signal 8 is configured such that the user receives instructions for improving his or her movements during the training. The compliance signal 8 can, for example, be presented on a display of the tracker or of the analysis arrangement. Thus, the physical training system can assist the user in enhancing his or her training success.

The model generation arrangement 2 and the analysis arrangement 3 each comprises a computer. The computers can be used for computing the preprocessing of the first sensor data 5, modeling the individual movement model 6, evaluating the second sensor data 7 and checking the compliance of the conducted training with the individual movement model 6.

For example, the tracker 1 is mounted to the body part as just being a tracker unit, or the tracker is integrated in a watch like device that is already equipped with a sensor unit. The sensor unit of the device could be configured to conduct the function of the tracker, for example by running a software application on the watch like device. The computer for the model generation arrangement 2 can be a laptop or desktop computer configured to conduct the functions of the model generation arrangement. The computer for the analysis arrangement 3 could be tablet device or a mobile phone configured to conduct the functions of the analysis arrangement. A tablet device or mobile phone can easily be carried on to the training site or even kept handy during the training. Also, the computing device for the analysis arrangement 3 could be realized by the watch like device exerting the functions of the tracker in case the computing capacity allows for running the analysis software application or by a smartphone.

In one embodiment of the method and the system, the tracker 1 detects plural first sensor data 5 about plural sequences of motion. The plural first sensor data can be gathered by detecting repetitions of the same motion sequence or by detecting differing motion sequences performed during different types of exercises. Each of the plural primary datasets are transmitted to the model generation arrangement 2, which preprocesses them and generates a set of individual movement model data comprising an individual movement model 6 for each of the preprocessed plural primary datasets. For preparing the training, the model generation arrangement 2 selects one of the individual movement models as the reference individual movement model 6 as the basis for the compliance check step during subsequent training of the body part. Preferably, the model generation arrangement 2 selects the individual movement model 6 from the set of individual movement models by applying a dynamic time warping algorithm. Alternatively to selecting one of the individual movement models, the plural individual movement models can also be processed to one resulting output model as the individual movement model 6. For example, the output model can be generated by generating averages of the plural individual movement models or the like.

In one example of pursuing the method, the user 4 mounts the tracker 1 to his wrist or ankle, respectively. The user 4 starts the detection of a sequence of motion related to an exercise either by initiating the detection at the tracker 1 or at the model generation arrangement 2. The user 4 performs the exercise of his or her choice that provides the physical training the user is interested in. As a result, the tracker 1 is three-dimensionally moved according to the sequence of motion of the exercise and the sensor unit of the tracker detects the first sensor data 5. The detection either stops automatically after a defined period of time or can be stopped by the user 4. The primary dataset is either stored in the intermediate storage of the tracker before transmission to the model generation arrangement 2 or is transferred by a live stream to the model generation arrangement 2. The model generation arrangement 2 preprocesses the first sensor data 5 and generates the individual movement model 6 to prepare for the training for the user 4. The generated individual movement model 6 is transferred to the analysis arrangement 4, which preferably can be monitored by the user 5 during performing the prepared training session.

Now, the user 4 starts his or her training wherein the tracker again is moved three-dimensionally according the training exercise. The tracker may start automatically, be always running or when initiating it to detect the current motion or the sequence of current motions, respectively, as second sensor data 7. The secondary dataset is either stored in the intermediate storage of the tracker before transmission to the analysis arrangement 3, or is transferred by a live stream to the analysis arrangement 3. The detection of a secondary dataset terminates automatically, while the detection of a further secondary dataset starts subsequently. The analysis arrangement 3 evaluates the second sensor data 7 and checks compliance with the individual movement model 6. The results of the compliance check may be transferred to the analysis arrangement 2 or the tracker unit for immediate information of the user 4, or it may be transferred to the model generation arrangement 2. The model generation arrangement 2 may for example create a protocol about the course of the training and the performance thereof.

This description and the accompanying drawing that illustrate aspects and embodiments of the present invention should not be taken as limiting the claims defining the protected invention. In other words, while the invention has been illustrated and described in detail in the drawing and foregoing description, such illustration and description are to be considered illustrative or exemplary and not restrictive. Various mechanical, compositional, structural, electronical, and operational changes may be made without departing from the scope of this description and the claims. In some instances, well-known circuits, structures and techniques have not been shown in detail in order not to obscure the invention. Thus, it will be understood that changes and modifications may be made by those of ordinary skill within the scope of the following claims.

The disclosure also covers further features shown in the drawing individually although they may not have been described in the description afore. Also, single alternatives of the embodiments described in the description and single alternatives of features thereof can be disclaimed from the subject matter of the invention or from disclosed subject matter. The disclosure comprises subject matter consisting of the features defined in the claims or the exemplary embodiments as well as subject matter comprising said features.

Furthermore, in the claims the word "comprising" does not exclude other elements or steps, and the indefinite article "a" or "an" does not exclude a plurality. A single unit or step may fulfil the functions of several features recited in the claims. The mere fact that certain measures are recited in mutually different dependent claims does not indicate that a combination of these measures cannot be used to advantage. Any reference signs in the claims should not be construed as limiting the scope.

A software application program may be stored and distributed on a suitable medium, such as an optical storage medium or a solid-state medium supplied together with or as part of other hardware, but may also be distributed in other forms, such as via the Internet or other wired or wireless telecommunication systems. In particular, e.g., a software application program can be a computer program product stored on a computer readable medium which computer program product can have computer executable program code adapted to be executed to implement a specific method such as the method according to the invention. Furthermore, a computer program can also be a data structure product or a signal for embodying a specific method such as the method according to the invention.

The system for physical training of a body part according to the invention can for example be purchased when the user buys a tracker device. Alternatively, the system can be purchased as a download application that can be installed on existing tracker device and computer devices of the user. The method of physically training a body part of a user according to the invention can be used or applied by the user or by a personal trainer assisting the exercising person in his or her training. While the person needs to perform the exercises himself or herself, the technical devices used for conducting the training method enable the person to improve his or her training success.

### Reference signs:

- 1: tracker
- 2: model generation arrangement
- 3: analysis arrangement
- 4: user
- 5: first sensor data
- 6: individual movement model
- 7: second sensor data
- 8: compliance signal

## Claims

1. System for physical training of a body part, comprising
a tracker (1) having a mounting structure configured to fasten the tracker to a particular body part of a user (4) and a sensor unit configured to three-dimensionally detect a movement of the body part;
a model generation arrangement (2) connectable to the tracker (1) and configured to obtain first sensor data (5) about a sequence of motion detected by the tracker (1) and to preprocess the obtained first sensor data (5) to generate an individual movement model (6) based on the preprocessed first sensor data (5) using a modeling unit; and
an analysis arrangement (3) connectable to the tracker (1) and configured to evaluate second sensor data (7) about a current motion of the body part and to check compliance of the evaluated secondary sensor (7) data with respect to the individual movement model (6),
whereby the model generation arrangement (2) is configured to obtain plural first sensor data (5) about plural sequences of motion detected by the tracker (1), to preprocess the obtained plural first sensor data (5),
**characterized**
**in that** the model generation arrangement (2) is further configured to generate a set of individual movement models based on the preprocessed plural first sensor data (5) and to select the individual movement model (6) from the set of individual movement models or to process the individual movement models to one resulting output model as the individual movement model (6),
**in that** the analysis arrangement (3) is configured to evaluate the second sensor data (7) about the current motion of the body part by evaluation of a complete training sequence of the current motion, and
**in that** the analysis arrangement (3) is configured to evaluate the second sensor data (7) about the current motion of the body part and to check the compliance of the evaluated second sensor data (7) with respect to the individual movement model (6) by applying a dynamic time warping algorithm.

2. The system of claim 1, wherein the model generation arrangement (2) is configured to preprocess the obtained first sensor data (5) by applying one or more of filtering, smoothing out, normalizing, and transforming coordinate system.

3. The system of claim 1 or 2, wherein the model generation arrangement (2) is configured to select the individual movement model (6) from the set of individual movement models by applying a dynamic time warping algorithm.

4. The system of any one of the preceding claims, wherein the analysis arrangement (3) is configured to provide a compliance signal (8) representing a level of compliance of the evaluated second sensor data (7) with respect to the individual movement model (6).

5. The system of any one of the preceding claims, wherein the analysis arrangement (3) is configured to evaluate the second sensor data (7) about the current motion of the body part by determining a quantity of repetitions identified in the complete training sequence, a duration of the complete training sequence, a duration of repetitions identified in the complete training sequence, or any combination thereof.

6. The system of any one of the preceding claims, wherein the analysis arrangement (3) is configured to check the compliance of the evaluated secondary sensor (7) data with respect to the individual movement model (6) by comparing the complete training sequence or a repetition identified in the complete training sequence.

7. The system of any one of the preceding claims, wherein the analysis arrangement (3) is configured to check the compliance of the evaluated secondary sensor (7) data with respect to the individual movement model (6) by calculating a matching score.

8. The system of any one of the preceding claims, wherein the analysis arrangement (3) is configured to evaluate the second sensor data (7) about the current motion of the body part by taking into account a speed of the current motion, a regularity of the current motion, an acceleration of the current motion, a consistency of the current motion, a trembling identified in the current motion, or any combination thereof.

9. Method of physically training a body part of a user (4), comprising steps of
i) preparing a training by generating a movement model defined by a sequence of motion for physically training the body part, and
ii) monitoring an exercise of the user by analyzing an effective sequence of motion with respect to its compliance with the movement model such that a conclusion about a performance of the training can be drawn, wherein
step i) comprises
mounting a tracker (1) to the body part,
the user moving the body part in accordance with a sequence of motion corresponding to an exercise to train the body part,
a sensor unit of the tracker (1) three-dimensionally detecting the sequence of motion of the body part,
transferring plural first sensor data (5) detected by the sensor unit of the tracker (1) about plural sequences of motion to a model generation arrangement (2) connected to the tracker (1),
the model generation arrangement (2) preprocessing the transferred plural first sensor data (5), and
a modeling unit of the model generation arrangement (2) generating a set of individual movement models based on the preprocessed plural first sensor data, wherein the model generation arrangement (2) selects an individual movement model (6) from the set of individual movement models or processes the individual movement models to one resulting output model as the individual movement model (6); and
step ii) comprises
transferring second sensor data (7) detected by the sensor unit of the tracker (1) about a current motion or a current sequence of motion of the body part during the user (4) exercising the body part to an analysis arrangement (3),
the analysis arrangement (3) evaluating the second sensor data (7) by evaluation of a complete training sequence of the current motion, and
the analysis arrangement (3) checking compliance of the evaluated second sensor data (7) with respect to the individual movement model (6), wherein the analysis arrangement (3) evaluates the second sensor data (7) about the current motion or the current sequence of motion of the body part and checks the compliance of the evaluated second sensor data (7) with respect to the individual movement model by applying a dynamic time warping algorithm.

10. The method of claim 9, wherein step ii) comprises providing a compliance signal (8) representing a level of compliance of the evaluated second sensor data (7) with respect to the individual movement model (6).

11. The method of claim 9 or 10, wherein the model generation arrangement (2) selects the individual movement model (6) from the set of individual movement models by applying a dynamic time warping algorithm.

12. The method of any one of claims 9 to 11, wherein the analysis arrangement (3) evaluates the second sensor data (7) by determining a quantity of repetitions identified in the complete training sequence, a duration of the complete training sequence, a duration of repetitions identified in the complete training sequence or a combination thereof.

13. The method of any one of claims 9 to 12, wherein the analysis arrangement (3) checks the compliance of the evaluated second sensor data (7) with respect to the individual movement model (6) by comparing the complete training sequence or a repetition identified in the complete training sequence.

14. The method of any one of claims 9 to 13, wherein the analysis arrangement (3) checks the compliance of the evaluated second sensor data (7) with respect to the individual movement model (6) by calculating a matching score.

15. The method of any one of claims 9 to 14, wherein the analysis arrangement (3) evaluates the second sensor data (7) by taking into account a speed of the current motion, a regularity of the current motion, an acceleration of the current motion, a consistency of the current motion, a trembling identified in the current motion or any combination thereof.

## Patentansprüche

1. System zum körperlichen Training eines Körperteils, umfassend
einen Tracker (1) mit einer Befestigungsstruktur, die dazu ausgebildet ist, den Tracker an einem bestimmten Körperteil eines Benutzers (4) zu befestigen, und mit einer Sensoreinheit, die dazu ausgebildet ist, eine Bewegung des Körperteils dreidimensional zu erfassen;
eine Modellerzeugungsanordnung (2), die mit dem Tracker (1) verbunden werden kann und dazu ausgebildet ist, erste Sensordaten (5) über eine von dem Tracker (1) erfasste Bewegungssequenz zu erhalten und die erhaltenen ersten Sensordaten (5) vorzuverarbeiten, um ein individuelles Bewegungsmodell (6) auf der Basis der vorverarbeiteten ersten Sensordaten (5) unter Verwendung einer Modellierungseinheit zu erzeugen; und
eine Analyseanordnung (3), die mit dem Tracker (1) verbunden werden kann und dazu ausgebildet ist, zweite Sensordaten (7) über eine aktuelle Bewegung des Körperteils auszuwerten und die Übereinstimmung der ausgewerteten Daten des zweiten Sensors (7) mit dem individuellen Bewegungsmodell (6) zu prüfen,
wobei die Modellerzeugungsanordnung (2) dazu ausgebildet ist, eine Vielzahl von ersten Sensordaten (5) über eine Vielzahl von durch den Tracker (1) erfassten Bewegungssequenzen zu erhalten, um die erhaltene Vielzahl von ersten Sensordaten (5) vorzuverarbeiten,
**dadurch gekennzeichnet, dass** die Modellerzeugungsanordnung (2) ferner dazu ausgebildet ist, einen Satz von individuellen Bewegungsmodellen auf der Grundlage der vorverarbeiteten Vielzahl von ersten Sensordaten (5) zu erzeugen und das individuelle Bewegungsmodell (6) aus dem Satz von individuellen Bewegungsmodellen auszuwählen oder die individuellen Bewegungsmodelle zu einem resultierenden Ausgangsmodell als das individuelle Bewegungsmodell (6) zu verarbeiten,
dass die Analyseanordnung (3) dazu ausgebildet ist, die zweiten Sensordaten (7) über die aktuelle Bewegung des Körperteils durch die Auswertung einer vollständigen Trainingssequenz der aktuellen Bewegung auszuwerten, und
dass die Analyseanordnung (3) dazu ausgebildet ist, die zweiten Sensordaten (7) über die aktuelle Bewegung des Körperteils auszuwerten und die Übereinstimmung der ausgewerteten zweiten Sensordaten (7) mit dem individuellen Bewegungsmodell (6) durch Anwendung eines dynamischen Zeitverschiebungsalgorithmus zu prüfen.

2. System nach Anspruch 1, wobei die Modellerzeugungsanordnung (2) dazu ausgebildet ist, die erhaltenen ersten Sensordaten (5) durch Anwendung von einem oder mehreren von Filterung, Glättung, Normalisierung und Transformation eines Koordinatensystems vorzuverarbeiten.

3. System nach Anspruch 1 oder 2, wobei die Modellerzeugungsanordnung (2) dazu ausgebildet ist, das individuelle Bewegungsmodell (6) aus dem Satz von individuellen Bewegungsmodellen durch Anwendung eines dynamischen Zeitverschiebungsalgorithmus auszuwählen.

4. System nach einem der vorhergehenden Ansprüche, wobei die Analyseanordnung (3) dazu ausgebildet ist, ein Übereinstimmungssignal (8) bereitzustellen, das einen Grad der Übereinstimmung der ausgewählten zweiten Sensordaten (7) mit dem individuellen Bewegungsmodell (6) darstellt.

5. System nach einem der vorhergehenden Ansprüche, wobei die Analyseanordnung (3) dazu ausgebildet ist, die zweiten Sensordaten (7) über die aktuelle Bewegung des Körperteils dadurch auszuwerten, dass eine in der vollständigen Trainingssequenz festgestellte Menge von Wiederholungen, eine Dauer der vollständigen Trainingssequenz, eine Dauer von in der vollständigen Trainingssequenz festgestellten Wiederholungen oder eine Kombination davon ermittelt wird.

6. System nach einem der vorhergehenden Ansprüche, wobei die Analyseanordnung (3) dazu ausgebildet ist, die Übereinstimmung der ausgewerteten Daten des zweiten Sensors (7) mit dem individuellen Bewegungsmodell (6) durch einen Vergleich der vollständigen Trainingssequenz oder einer in der vollständigen Trainingssequenz festgestellten Wiederholung zu prüfen.

7. System nach einem der vorhergehenden Ansprüche, wobei die Analyseanordnung (3) dazu ausgebildet ist, die Übereinstimmung der ausgewerteten Daten des zweiten Sensors (7) mit dem individuellen Bewegungsmodell (6) durch Berechnung eines Matching Scores zu prüfen.

8. System nach einem der vorhergehenden Ansprüche, wobei die Analyseanordnung (3) dazu ausgebildet ist, die zweiten Sensordaten (7) über die aktuelle Bewegung des Körperteils dadurch auszuwerten, dass eine Geschwindigkeit der aktuellen Bewegung, eine Regelmäßigkeit der aktuellen Bewegung, eine Beschleunigung der aktuellen Bewegung, eine Konstanz der aktuellen Bewegung, ein in der aktuellen Bewegung festgestelltes Zittern oder eine Kombination davon berücksichtigt wird.

9. Verfahren zum körperlichen Training eines Körperteils eines Benutzers (4), mit den folgenden Schritten:
i) Vorbereiten eines Trainings durch Erzeugen eines Bewegungsmodells, das durch eine Bewegungssequenz zum körperlichen Training des Körperteils definiert ist, und
ii) Überwachen einer Übung des Benutzers durch Analysieren einer effektiven Bewegungssequenz hinsichtlich ihrer Übereinstimmung mit dem Bewegungsmodell, sodass eine Schlussfolgerung über eine Leistung des Trainings gezogen werden kann, wobei
Schritt i) Folgendes umfasst:
Befestigen eines Trackers (1) an dem Körperteil,
wobei der Benutzer das Körperteil gemäß einer Bewegungssequenz bewegt, die einer Übung zum Trainieren des Körperteils entspricht,
wobei eine Sensoreinheit des Trackers (1) die Bewegungssequenz des Körperteils dreidimensional erfasst,
Übertragen der Vielzahl von durch die Sensoreinheit des Trackers (1) erfassten ersten Sensordaten (5) über eine Vielzahl von Bewegungssequenzen zu einer mit dem Tracker (1) verbundenen Modellerzeugungsanordnung (2),
wobei die Modellerzeugungsanordnung (2) die übertragene Vielzahl von ersten Sensordaten (5) vorverarbeitet, und
eine Modellierungseinheit der Modellerzeugungsanordnung (2), die einen Satz von individuellen Bewegungsmodellen auf der Grundlage der vorverarbeiteten Vielzahl von ersten Sensordaten erzeugt, wobei die Modellerzeugungsanordnung (2) ein individuelles Bewegungsmodell (6) aus dem Satz von individuellen Bewegungsmodellen auswählt oder die individuellen Bewegungsmodelle zu einem resultierenden Ausgangsmodell als das individuelle Bewegungsmodell (6) verarbeitet; und
Schritt ii) Folgendes umfasst:
Übertragen der von der Sensoreinheit des Trackers (1) erfassten zweiten Sensordaten (7) über eine aktuelle Bewegung oder eine aktuelle Bewegungssequenz des Körperteils, während der Benutzer (4) das Körperteil trainiert, zu einer Analyseanordnung (3),
wobei die Analyseanordnung (3) die zweiten Sensordaten (7) durch Auswertung einer vollständigen Trainingssequenz der aktuellen Bewegung auswertet, und
wobei die Analyseanordnung (3) die Übereinstimmung der ausgewerteten zweiten Sensordaten (7) mit dem individuellen Bewegungsmodell (6) prüft, wobei die Analyseanordnung (3) die zweiten Sensordaten (7) über die aktuelle Bewegung oder die aktuelle Bewegungssequenz des Körperteils auswertet und die Übereinstimmung der ausgewerteten zweiten Sensordaten (7) mit dem individuellen Bewegungsmodell durch Anwendung eines dynamischen Zeitverschiebungsalgorithmus prüft.

10. Verfahren Anspruch 9, wobei Schritt ii) das Bereitstellen eines Übereinstimmungssignals (8) umfasst, das einen Grad der Übereinstimmung der ausgewählten zweiten Sensordaten (7) mit dem individuellen Bewegungsmodell (6) darstellt.

11. Verfahren nach Anspruch 9 oder 10, wobei die Modellerzeugungsanordnung (2) das individuelle Bewegungsmodell (6) aus dem Satz von individuellen Bewegungsmodellen durch Anwendung eines dynamischen Zeitverschiebungsalgorithmus auswählt.

12. Verfahren nach einem der Ansprüche 9 bis 11, wobei die Analyseanordnung (3) die zweiten Sensordaten (7) dadurch auswertet, dass eine in der vollständigen Trainingssequenz festgestellte Menge von Wiederholungen, eine Dauer der vollständigen Trainingssequenz, eine Dauer von in der vollständigen Trainingssequenz festgestellten Wiederholungen oder eine Kombination davon ermittelt wird.

13. Verfahren nach einem der Ansprüche 9 bis 12, wobei die Analyseanordnung (3) die Übereinstimmung der ausgewerteten zweiten Sensordaten (7) mit dem individuellen Bewegungsmodell (6) durch einen Vergleich der vollständigen Trainingssequenz oder einer in der vollständigen Trainingssequenz festgestellten Wiederholung prüft.

14. Verfahren nach einem der Ansprüche 9 bis 13, wobei die Analyseanordnung (3) die Übereinstimmung der ausgewerteten zweiten Sensordaten (7) mit dem individuellen Bewegungsmodell (6) durch Berechnung eines Matching Scores prüft.

15. Verfahren nach einem der Ansprüche 9 bis 14, wobei die Analyseanordnung (3) die zweiten Sensordaten (7) dadurch auswertet, dass eine Geschwindigkeit der aktuellen Bewegung, eine Regelmäßigkeit der aktuellen Bewegung, eine Beschleunigung der aktuellen Bewegung, eine Konstanz der aktuellen Bewegung, ein in der aktuellen Bewegung festgestelltes Zittern oder eine Kombination davon berücksichtigt wird.

## Revendications

1. Système d'entraînement physique d'une partie du corps, comprenant
un tracker (1) doté d'une structure de montage configurée pour fixer le tracker à une partie particulière du corps d'un utilisateur (4) et d'une unité de capteur configurée pour détecter en trois dimensions un mouvement de la partie du corps ;
un agencement de génération de modèles (2) connectable au tracker (1) et configuré pour obtenir les premières données de capteur (5) concernant une séquence de mouvements détectée par le tracker (1) et pour prétraiter les premières données de capteur obtenues (5) afin de générer un modèle de mouvement individuel (6) basé sur les premières données de capteur prétraitées (5) en utilisant une unité de modélisation ; et
un agencement d'analyse (3) connectable au tracker (1) et configuré pour évaluer les deuxièmes données de capteur (7) concernant un mouvement actuel de la partie du corps et pour vérifier la conformité des données évaluées du capteur secondaire (7) par rapport au modèle de mouvement individuel (6),
l'agencement de génération de modèles (2) étant configuré pour obtenir plusieurs premières données de capteur (5) concernant plusieurs séquences de mouvement détectées par le tracker (1), pour prétraiter les plusieurs premières données de capteur (5) obtenues,
**caractérisé en ce que** l'agencement de génération de modèles (2) est en outre configuré pour générer un ensemble de modèles de mouvement individuels basé sur les premières données de capteur (5) prétraitées et pour sélectionner le modèle de mouvement individuel (6) dans l'ensemble de modèles de mouvement individuels ou pour traiter les modèles de mouvement individuels afin d'obtenir un modèle de sortie résultant en tant que modèle de mouvement individuel (6),
**en ce que** l'agencement d'analyse (3) est configuré pour évaluer les deuxièmes données de capteur (7) concernant le mouvement actuel de la partie du corps en évaluant une séquence d'entraînement complète du mouvement actuel, et
**en ce que** l'agencement d'analyse (3) est configuré pour évaluer les deuxièmes données de capteur (7) concernant le mouvement actuel de la partie du corps et pour vérifier la conformité des deuxièmes données de capteur (7) évaluées par rapport au modèle de mouvement individuel (6) en appliquant un algorithme de déformation temporelle dynamique.

2. Système selon la revendication 1, dans lequel l'agencement de génération de modèles (2) est configuré pour prétraiter les premières données de capteur obtenues (5) en appliquant un ou plusieurs procédures de filtrage, de lissage, de normalisation et de transformation d'un système de coordonnées.

3. Système selon la revendication 1 ou 2, dans lequel l'agencement de génération de modèles (2) est configuré pour sélectionner le modèle de mouvement individuel (6) dans l'ensemble des modèles de mouvement individuels en appliquant un algorithme de déformation temporelle dynamique.

4. Système selon l'une quelconque des revendications précédentes, dans lequel l'agencement d'analyse (3) est configuré pour fournir un signal de conformité (8) représentant un niveau de conformité des deuxièmes données de capteur évaluées (7) par rapport au modèle de mouvement individuel (6).

5. Système selon l'une quelconque des revendications précédentes, dans lequel l'agencement d'analyse (3) est configuré pour évaluer les deuxièmes données de capteur (7) concernant le mouvement actuel de la partie du corps en déterminant une quantité de répétitions identifiées dans la séquence d'entraînement complète, une durée de la séquence d'entraînement complète, une durée des répétitions identifiées dans la séquence d'entraînement complète, ou toute combinaison de ces éléments.

6. Système selon l'une quelconque des revendications précédentes, dans lequel l'agencement d'analyse (3) est configuré pour vérifier la conformité des données évaluées du capteur secondaire (7) par rapport au modèle de mouvement individuel (6) en comparant la séquence d'entraînement complète ou une répétition identifiée dans la séquence d'entraînement complète.

7. Système selon l'une quelconque des revendications précédentes, dans lequel l'agencement d'analyse (3) est configuré pour vérifier la conformité des données évaluées du capteur secondaire (7) par rapport au modèle de mouvement individuel (6) en calculant un score de correspondance.

8. Système selon l'une quelconque des revendications précédentes, dans lequel l'agencement d'analyse (3) est configuré pour évaluer les deuxièmes données de capteur (7) concernant le mouvement actuel de la partie du corps en tenant compte d'une vitesse du mouvement actuel, d'une régularité du mouvement actuel, d'une accélération du mouvement actuel, d'une cohérence du mouvement actuel, d'un tremblement identifié dans le mouvement actuel, ou de toute combinaison de ces éléments.

9. Procédé d'entraînement physique d'une partie du corps d'un utilisateur (4), comprenant les étapes suivantes :
i) préparer un entraînement en générant un modèle de mouvement défini par une séquence de mouvement pour l'entraînement physique de la partie du corps, et
ii) surveiller un exercice de l'utilisateur en analysant une séquence effective de mouvement par rapport à sa conformité avec le modèle de mouvement de manière à pouvoir tirer une conclusion sur la performance de l'entraînement, dans laquelle
l'étape i) comprend
montage d'un tracker (1) sur la partie du corps,
l'utilisateur bougeant la partie du corps conformément à une séquence de mouvements correspondant à un exercice pour entraîner la partie du corps,
une unité de capteur du tracker (1) détectant en trois dimensions la séquence de mouvements de la partie du corps,
transfert de plusieurs premières données de capteur (5) détectées par l'unité de capteur du tracker (1) concernant plusieurs séquences de mouvements à un agencement de génération de modèles (2) connecté au tracker (1),
l'agencement de génération de modèles (2) prétraitant la pluralité des premières données de capteur transférées (5), et
une unité de modélisation de l'agencement de génération de modèles (2) générant un ensemble de modèles de mouvement individuels basé sur la pluralité des premières données de capteur prétraitées, dans lequel l'agencement de génération de modèles (2) sélectionne un modèle de mouvement individuel (6) parmi l'ensemble de modèles de mouvement individuels ou traite les modèles de mouvement individuels pour obtenir un modèle de sortie résultant en tant que modèle de mouvement individuel (6) ; et
l'étape ii) comprend
le transfert des deuxièmes données de capteur (7) détectées par l'unité de capteur du tracker (1) concernant un mouvement actuel ou une séquence de mouvements actuelle de la partie du corps pendant que l'utilisateur (4) exerce la partie du corps vers un agencement d'analyse (3),
l'agencement d'analyse (3) évaluant les deuxièmes données de capteur (7) par l'évaluation d'une séquence d'entraînement complète du mouvement actuel, et
l'agencement d'analyse (3) vérifiant la conformité des deuxièmes données de capteur évaluées (7) par rapport au modèle de mouvement individuel (6), dans lequel l'agencement d'analyse (3) évalue les deuxièmes données de capteur (7) concernant le mouvement actuel ou la séquence de mouvement actuelle de la partie du corps et vérifie la conformité des deuxièmes données de capteur évaluées (7) par rapport au modèle de mouvement individuel en appliquant un algorithme de déformation temporelle dynamique.

10. Procédé selon la revendication 9, dans lequel l'étape ii) comprend la fourniture d'un signal de conformité (8) représentant un niveau de conformité des deuxièmes données de capteur évaluées (7) par rapport au modèle de mouvement individuel (6).

11. Procédé selon la revendication 9 ou 10, dans lequel l'agencement de génération de modèle (2) sélectionne le modèle de mouvement individuel (6) dans l'ensemble de modèles de mouvement individuels en appliquant un algorithme de déformation temporelle dynamique.

12. Procédé selon l'une quelconque des revendications 9 à 11, dans lequel l'agencement d'analyse (3) évalue les deuxièmes données de capteur (7) en déterminant une quantité de répétitions identifiées dans la séquence d'entraînement complète, une durée de la séquence d'entraînement complète, une durée des répétitions identifiées dans la séquence d'entraînement complète, ou toute combinaison de ces éléments.

13. Procédé selon l'une quelconque des revendications 9 à 12, dans lequel l'agencement d'analyse (3) vérifie la conformité des deuxièmes données de capteur (7) évaluées par rapport au modèle de mouvement individuel (6) en comparant la séquence d'entraînement complète ou une répétition identifiée dans la séquence d'entraînement complète.

14. Procédé selon l'une quelconque des revendications 9 à 13, dans lequel l'agencement d'analyse (3) vérifie la conformité des deuxièmes données de capteur évaluées (7) par rapport au modèle de mouvement individuel (6) en calculant un score de correspondance.

15. Procédé selon l'une quelconque des revendications 9 à 14, dans lequel l'agencement d'analyse (3) évalue les deuxièmes données de capteur (7) en tenant compte d'une vitesse du mouvement actuel, d'une régularité du mouvement actuel, d'une accélération du mouvement actuel, d'une cohérence du mouvement actuel, d'un tremblement identifié dans le mouvement actuel, ou de toute combinaison de ces éléments.
